# EUROPEAN PATENT APPLICATION

(11) **EP 0 764 598 A1**
(43) Date of publication of application: **26.03.1997**
(21) Application number: 95830381.0
(22) Date of filing: 19.09.1995
(51) Int. Cl.: B65G 13/07, B65G 47/26

(54) **Mechanical transmission for a roller conveyor**

(71) Applicant: T.T.C. TERMO TECNICA CERAMICA S.p.A., I-42010 Casalgrande (RE) (IT)
(72) Inventor: Nassetti, Roberto, I-20080 Zibido San Giacomo (MI) (IT)
(74) Representative: Lanzoni, Luciano

(57) **Abstract**

The invention relates to a mechanical transmission for roller conveyors comprising a plurality of rollers (1) placed side-by-side and rotated in a same direction such as to generate a conveyor plane. Transmission of rotation to each roller is realized by means of a belt driven by a drive shaft (2) disposed parallel to a drive direction of the rollers (1). The belt (3) winds on a first pair of wheels (21 and 22) arranged coaxially on the drive shaft (2) and a second pair of wheels (11 and 12) coaxially arranged on an end (10) of at least some of the plurality of rollers (1) such that four branches of belt (3) obtain. One of each of the first and second pair of wheels (21 and 11) is solid in rotation respectively with the drive shaft (2) and the end (10), while a remaining one of each of first and second pair of wheels (22) and (12) is idle.

## Description

The invention relates to a mechanical transmission for roller planes of the type comprising a plurality of motorized consecutively-arranged rollers, rotated to generate a transport plane.

Roller conveyors are of many and various types and are widely used in many industrial sectors.

Especially, but not exclusively, the present invention is useful in all cases where the conveyor is constituted by an elevated number of consecutive rollers which are made to rotate in phase and synchronically, which is necessary, for example, where the transport direction of the roller conveyor (ie. the roller rotation direction) has to be rapidly inverted. In this situation the inversion of roller direction has to be contemporaneous for all of the rollers. One sector where such rapid inversion is necessary is that of roller planes working in kilns for heat treatment of glassy materials (sheets of glass and the like), where rapid bidirectional movement of the glass sheets is necessary.

Known-type realizations are not suitable for the above-mentioned process, as they transmit drive to the rollers through mechanical transmissions arranged in a chain sequence (through a transmission organ each roller transmits drive to a next roller). The build-up of play in the above type of transmission prevents the rollers from drawing a next roller into rotation synchronically; the result is that there is uneven movement among the rollers and the objects placed thereon are dragged rather than perfectly drawn.

A worm screw is also known in drive transmission.

The worm screw is arranged parallel to the advancement direction of the rollers, each roller being coupled thereto by means of a cogwheel solidly constrained to the roller itself. This system, while eliminating the play characteristic of the first-described above system, exhibits the drawbacks firstly of not permitting a simple engaging and disengaging of the transmission for each single roller, and secondly of being subject to speed limitations.

The present invention as it characterized in the claims, obviates the drawbacks of the prior art by providing a mechanical belt transmission which is especially simple and effective.

One of the advantages of the present invention is that drive can be engaged or disengaged with extreme simplicity on each single roller, without interfering with the other rollers in the plane.

Further characteristics and advantages of the present invention will better emerge from the detailed description that follows, of some embodiments of the invention, illustrated in the form of non-limiting examples in the accompanying drawings, in which:

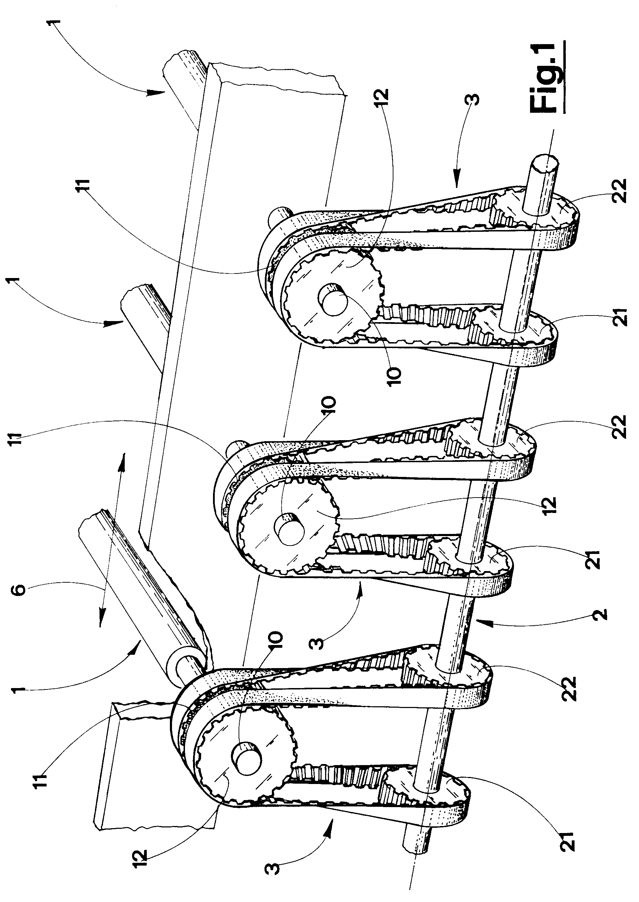

figure 1 shows a schematic perspective view of a first embodiment of the invention;
figure 2 shows a schematic perspective view of a second embodiment of the invention;
figure 3 shows a schematic perspective view of a third embodiment of the invention.

With reference to the figures, 1 denotes a consecutive plurality of rollers constituting a roller plane constituting a conveyor. The rollers 1 are rotated in synchrony about their respective axes so that objects placed thereon are moved by friction force in a direction denoted by the arrow 6.

Drive transmission to the rollers 1 is realized by means of a drive shaft 2 activated by a motor (not illustrated) arranged parallel to the drive direction of the rollers 1, indicated by arrow 6.

In the first embodiment illustrated, the drive shaft 2 is provided at each end 10 of each of the rollers 1 with a first pair of equal-diameter coaxial wheels 21 and 22, of which wheel 21 is solid in rotation with the drive shaft 2 while wheel 22 is mounted idle on the drive shaft 2.

All of the wheels described in the preferred embodiments are cogged, as are the relative drive belts, through all could equally be provided with uncogged contact surfaces.

At an end 10 of and coaxial to each of the rollers 1 a second pair of equal-diameter coaxial wheels 11 and 12 are coupled, of which wheel 11 is solid in rotation with the roller 1 while wheel 12 is idly mounted on same. The arrangement of the first and second pairs of wheels 21 and 22, 11 and 12 is realized as specified hereinbelow.

The rotation axis of the roller 1 and therefore of the second pair of wheels 11 and 12 is contained in a plane medial of the corresponding first pair of wheels 21 and 22, which latter are coupled on the drive shaft 2 and are perpendicular to an axis thereof. The drive shaft 2 rotation axis is contained in a plane medial of the second pair of wheels 11 and 12, which plane is perpendicular to a rotation axis of said second pair of wheels 11 and 12.

The drive link between the drive shaft 2 and each single roller 1 is achieved by means of a belt 3 ring-wound between the first pair of wheels 21 and 22 and the second pair of wheels 11 and 12. The belt 3 is wound on the first and second pairs of wheels 21 and 22, 11 and 12 in such a way that four belt branches are created, each of which is comprised between one of the first pair of wheels 21 or 22 mounted on the drive shaft 2 and one of the second pair of wheels 11 or 12 coupled on the ends 10 of the rollers 1.

In order that the belt 3 can be correctly wound, the first pair of wheels 21 and 22 are placed apart at a distance which is approximately equal to the diameter of the second pair of wheels 11 and 12. Similarly the second pair of wheels 11 and 12 are situated a a distance one from the other which is approximately equal to the diameter of the first pair of wheels 21 and 22.

The belt branches created by the winding operation about the four wheels 11 and 12, 21 and 22, are equal. The belt 3 is twisted longitudinally by 90 degrees during the course of each branch.

Each of the plurality of rollers 1 is driven in the above-described way and motorization of the whole plane is thus obtained. Direct transmission of drive from the drive shaft 2 to each single roller 1 permits perfect synchrony of rotation thereof.

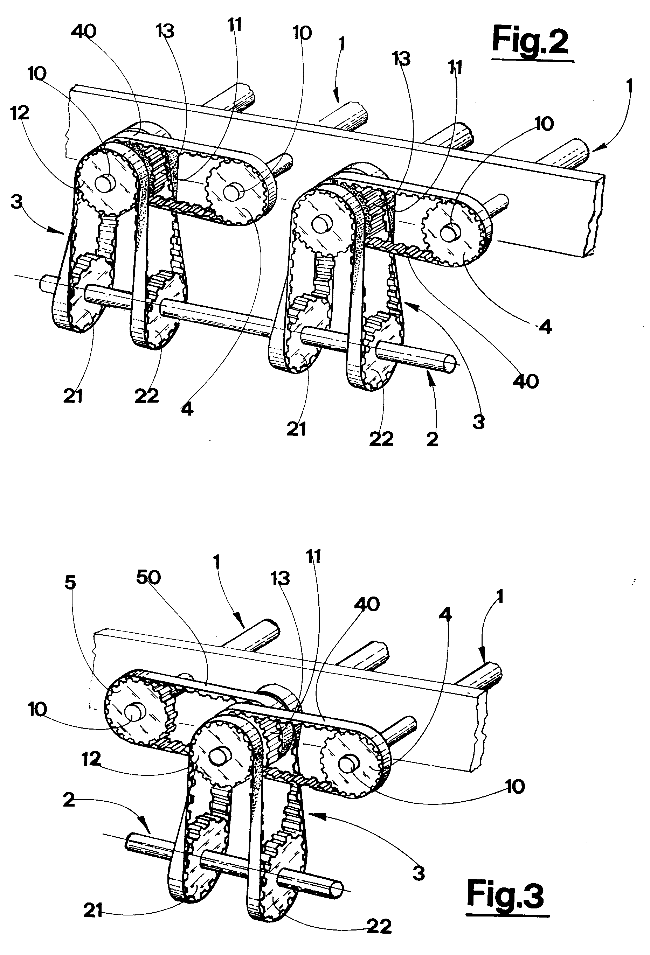

In a second embodiment of the invention, not all the rollers 1 of the plane are driven by a transmission such as that described above. In particular, in the embodiment illustrated in figure 2, a fifth wheel 13 is coupled solidly on an end 10 of a roller 1 in between the second pair of wheels 11 and 12. The fifth wheel 13 functions as a drive wheel for a belt-drive mechanical transmission wherein a first driven wheel 4 is solidly mounted on an end 10 of a contiguous roller 1.

A belt 40 is ring-wound on the fifth wheel 13 and the first driven wheel 4; thus, one every two rollers is driven directly by the drive shaft 2.

A third embodiment of the invention is an extension of the second embodiment as described above, which not only includes a fifth wheel 13 but also a sixth wheel 14, both keyed solidly on the end 10 of a roller 1 driven directly by the drive shaft 2. The fifth and sixth wheels 13 and 14 function as drive wheels for two belt transmissions in which the first driven wheel 4 of the second embodiment and a second driven wheel 5 are mounted on ends 10 of two next rollers 1, situated one either side of the roller 1 bearing the wheels 11 and 12, 13 and 14. A belt 40 is partially ring-wound on the the fifth wheel 13 and the first driven wheel 4, while a further belt 50 is ring-wound on the sixth wheel 14 and the second driven wheel 5.

## Claims

1. A mechanical transmission for a roller plane comprising a plurality of rollers positioned consecutively and rotated synchronisingly such as to give rise to a conveyor, which transmission is characterized in that it comprises:
a drive shaft (2) arranged parallel to an advancement direction of the roller plane according to a rotation direction of said plurality of rollers (1) forming the conveyor plane, and bearing at a position on said drive shaft (2) corresponding to an end (10) of at least some of said plurality of rollers (1) a first pair of coaxial wheels (21 and 22) situated at a predetermined reciprocal distance, a first wheel (21) of which first pair of coaxial wheels (21, 22) is solidly keyed on the drive shaft (2), a second wheel (22) of which first pair of coaxial wheels (21, 22) is idly coupled thereon;
at least a second pair of wheels (11 and 12) coaxially coupled at a predetermined distance on a corresponding end (10) of at least some of said plurality of rollers (1), a first wheel (11) of said second pair of wheels being solidly keyed on said end (10) while a second wheel (12) of said second pair of wheels (11, 12) is idly coupled thereon;
a belt (3) ring-wound and stretched between said first pair of wheels (21, 22) coupled on said drive shaft (2) and said second pair of wheels (11, 12) coupled on said end (10); said belt (3) being wound and stretched between said second pair of wheels (11, 12) coupled on said end (10) and said first pair of wheels (21 and 22) coupled on said drive shaft (2) in such a way that four branches of said belt (3) obtain, each of which four branches stretches between one of said first pair of wheels (21, 22) and one of said second pair of wheels (11, 12) coupled on the end (10).

2. A transmission as in claim 1, characterized in that:
at least the first wheel (21) of the first pair of wheels, which first wheel (21) is solidly coupled on the drive shaft (2), is cogged;
at least the first wheel (11) of the second pair of wheels, which first wheel (11) is solidly coupled to the end (10), is cogged;
said belt (3) is cogged on at least one surface thereof.

3. A transmission as in claim 2, characterized in that:
said second wheel (22) of the first pair of wheels (21, 22), idly coupled on said drive shaft (2), is cogged;
said second wheel (12) of the second pair of wheels idly coupled on said end (10), is cogged.

4. A transmission as in claim 3, characterized in that a rotation axis of each of said plurality of rollers (1) bearing said second pair of wheels (11, 12) is comprised in a plane which is medial of said first pair of wheels (21 and 22) and perpendicular to said drive shaft (2); a rotation axis of said drive shaft (2) being comprised in a plane which is medial of said second pair of wheels (11, 12) and perpendicular to the rotation axis of each of the plurality of rollers (1).

5. A transmission, as in claim 4, characterized in that said first pair of wheels (21 and 22) are equal in diameter and are placed at a reciprocal distance which is approximately equal to a diameter of the second pair of wheels (11 and 12);
said second pair of wheels (11 and 12) being situated at a reciprocal distance which is approximately equal to said diameter of said first pair of wheels (21 and 22).

6. A transmission as in claim 4, characterized in that it comprises:
at least a fifth wheel (13), solidly keyed on said end (10) of the roller (1), which fifth wheel (13) functions as a drive wheel for at least one belt transmission wherein a first driven wheel (4) is mounted on an end of at least one of the pluralty of rollers (1) situated contiguously to one of the plurality of rollers (1) bearing said second pair of wheels (11 and 12);
a belt (40) which is ring-wound about said fifth wheel (13) and said first driven wheel (4).

7. A transmission as in claim 4, characterized in that it comprises:
a fifth wheel and a sixth wheel (13 and 14) each solidly keyed on said end (10) and functioning as drive wheels for two belt-driven transmissions;
wherein a first driven wheel (4) and a second driven wheel (5) are solidly keyed on an end of one each of said plurality of rollers (1) situated either side of another of said plurality of rollers (1) bearing at said end (10) thereof said second pair of wheels (11 and 12);
a belt (40) ring-wound on said fifth wheel (13) and said first driven wheel (4);
a belt (50) ring-wound on said sixth wheel (14) and said second driven wheel (5).
